# EUROPÄISCHE PATENTANMELDUNG

(11) **EP 1 920 685 A2**
(43) Veröffentlichungstag der Anmeldung: **14.05.2008**
(21) Anmeldenummer: 07017699.5
(22) Anmeldetag: 11.09.2007
(51) Int. Cl.: A47J 31/46, A47J 31/54, F16L 37/088, F16L 37/14

(54) **Fluidleitungsverbindungsanordnung**

(30) Priorität: 10.11.2006 DE 202006017177 U
(71) Anmelder: Eugster/Frismag AG, 8590 Romanshorn (CH)
(72) Erfinder: Fischer, Daniel, 8590 Romanshorn (CH)
(74) Vertreter: Schubert, Siegmar

(57) **Zusammenfassung**

In einer Fluidleitungsverbindungsanordnung weist ein Verbindungsteil (4) zwei äußere Verbindungshülsenabschnitte (4a,4b) auf. Es verbindet eine erste Leitung (1) aus flexiblem Kunststoff mit einer zweiten Leitung (2). Jeweils auf einem Endabschnitt der ersten Leitung (1) und der zweiten Leitung (2) ist eine Verbindungsmuffe (5,7) form- und kraftschlüssig anliegend aufgebracht. An jedem der Verbindungshülsenabschnitte (4a,4b) kann jeweils eine Federklammer (11,12) als Arretierungselement lösbar angebracht werden, welches durch jeweils eine Schlitzaufnahme (9,10) in einem der Verbindungshülsenabschnitte (4a,4b) reicht und an der hinteren ringförmigen Stirnseite der eingesteckten Verbindungsmuffe anliegt. Auf die zweite Leitung (2), die eine starre metallische Anschlussleitung ist, ist eine metallische Verbindungsmuffe (7) aufgelötet. Die Verbindungsmuffe (5) der ersten Leitung umfasst einen Außenschlauchabschnitt aus einem laserstrahldurchlässigen, thermoplastischen Kunststoff und einen mit diesem koextrudierten Innenschlauchabschnitt aus einem laserstrahlabsorbierenden schweißbaren Kunststoff. Die Verbindungsmuffe (5) ist auf den Endabschnitt der ersten Leitung (1) aus schweißbarem Kunststoff gelasert.

## Beschreibung

Die Erfindung betrifft eine Fluidleitungsverbindungsanordnung nach dem Oberbegriff des Anspruchs 1.

In einer Fluidleitungsverbindungsanordnung nach der US-A-5 350 203 wird ein Rohr als erste Leitung mit einem Gehäuse in einer Bohrung als zweite Leitung dicht verbunden. Ein Endabschnitt des Rohrs weist im gegenseitigen Abstand zueinander ausgeformte ringförmige oder wulstförmige Erweiterungen auf, zwischen denen eine Muffe gehalten ist. Die Muffe hat an ihren Stirnseiten ringförmige Aussparungen, an denen die Erweiterungen des Rohrs anliegen können. Neben den ringförmigen Aussparungen weist die Muffe einen zylindrischen Umfangswandabschnitt auf. Das Gehäuse mit der als zweite Leitung dienenden Bohrung ist ein Formteil, in dem in Verlängerung der Bohrung eine erweiterte Bohrung ausgeformt ist, die an einer ringförmigen Schulter in die als zweite Leitung dienende Bohrung übergeht. Auf einer der Schulter gegenüber liegenden, nach außen offenen Seite ist aus dem Gehäuse ein noch stärker erweiterter, annähernd kegelstumpfförmiger hohler Abschnitt mit einer Hinterschneidung an der offenen Seite ausgeformt, die ein Halteelement aufnimmt. In einer Ausführungsform des Halteelements ist dieses mit einer scheibenförmigen, gelochten Grundseite und zwei von deren Rand abstehenden, abgewinkelten, federnden Laschen mit endseitigen Zungen ausgebildet. Das Halteelement kann sich mit seiner scheibenförmigen Grundseite an einer hinteren Stirnseite der in das Gehäuse eingeschobenen Muffe abstützen und sich mit den federnden Laschen bzw. Zungen gegenüber an der Hinterschneidung des kegelstumpfförmigen Abschnitts des Gehäuses abstützen. Ein O-Ring ist zwischen der Schulter der Bohrung in dem Gehäuse und der ihr zugewandten Stirnseite der Muffe vorgesehen, um die Fluidleitungsverbindungsanordnung nach außen abzudichten. Zur Montage wird vorzugsweise das Rohrende mit dem O-Ring, der Muffe und dem Halteelement in die axial offene Seite des Gehäuses eingeschoben, bis sich die federnden Laschen des Halteelements hinter der Hinterschneidung des Gehäuses aufspreizen. Zum Entfernen des Rohrendes sind die federnden Laschen mit einem Werkzeug zu greifen und aneinander zu drücken, wonach das Rohrende mit den genannten Elementen aus dem Gehäuse herausgezogen werden kann.

Eine zweite Ausführungsform des Halteelements ist als Sprengring bzw. Federring ausgebildet, der eine umlaufende Nut in der Muffe weitgehend umschließt und durch Eingriff einer Zange in Löcher an den Ringenden und Zusammenziehen der Ringenden aus der Nut entfernt werden kann.

Beide Ausführungsformen der bekannten Fluidleitungsverbindungsanordnung weisen eine verhältnismäßig komplizierte Formgebung auf, die fertigungsungünstig ist. Insbesondere das federnde Verbindungselement, welches die voneinander lösbaren Teile der Fluidleitungsverbindungsanordnung zusammenhalten soll, ist räumlich nicht kompakt, fertigungsaufwendig und im Bedarfsfall schwierig aus der Bohrung des Gehäuses zu entfernen, da dazu eine Zange in die Löcher der Zungen des Verbindungselements eingreifen muss, was in der Regel ein spezielles Werkzeug erfordert. Im wesentlichen die gleichen Nachteile hat auch die zweite Ausführungsform des bekannten Halteelements in Form eines Sprengrings bzw. Federrings, der in eine außen umlaufende Nut in der Muffe eingreift und diese weitgehend umschließt. Der Sprengring bzw. Federring kann ebenfalls nur durch Eingriff eines Werkzeugs bzw. einer Zange in Löcher an den Ringenden aus der Nut entfernt werden.

Um eine Fluidleitungsverbindungsanordnung zu schaffen, die mit unkompliziert herstellbaren Verbindungselementen und rasch durchführbaren Verbindungsvorgängen auskommt und gleichwohl eine gute Abdichtung der miteinander verbundenen Leitungen nach außen aufweist, ist bereits eine Fluidleitungsverbindungsanordnung gemäß dem Oberbegriff des Anspruchs 1 bzw. 2 bekannt (DE 203 18 857.8, EP 04 028 841.7). Die verbundene Leitung kann hierbei unter anderem eine flexible Leitung aus Kunststoff oder ein metallisches Rohr sein. Zur Herstellung der Verbindung dient ein Verbindungsteil, welches einen zwei äußere Verbindungshülsenabschnitte verbindenden Leitungsabschnitt umfassen kann. Weiterhin ist hierzu jeweils auf einen Endabschnitt der verbundenen Leitungen eine Verbindungsmuffe montiert, die innen und außen zylindrisch als Ring ausgebildet ist. Die Verbindungsmuffe kann aus Metall bestehen, aber auch als starres Kunststoffteil gespritzt sein. In den Endabschnitt der Leitung kann ein Stützrohr eingeschoben sein, auf dem sich die Leitung bei Aufschieben der Verbindungsmuffe abstützen kann. Zum lösbaren Verbinden jeder der beiden Leitungen ist ein Arretierungselement in Form einer Federklammer vorgesehen, die durch innen seitlich offenen Schlitzaufnahmen in die Verbindungshülse reicht und an einer hinteren ringförmigen Stirnseite der eingesteckten Verbindungsmuffe zur Anlage gelangt. Die Schlitzaufnahmen der Verbindungshülse kann nicht nur innen, sondern auch außen seitlich offen sein, was eine unkomplizierte Fertigung der Verbindungshülse und einfache Handhabung der Federklammer ermöglicht. Die Verbindungshülse kann statt dessen außen seitlich geschlossen sein, so dass die Federklammer weitgehend in den Schlitzaufnahmen verschwindet. Zur zuverlässigen Abdichtung nach außen ist jeweils ein O-Ring zwischen einer ringförmigen Schulter der Verbindungshülse und der vorderen ringförmigen Stirnseite der Verbindungsmuffe eingeschlossen.

Zum sicheren form- und kraftschlüssigen Aufbringen der Verbindungsmuffe auf dem Endabschnitt eines Schlauchs, der eine zu verbindende Leitung darstellt, kann die Verbindungsmuffe aus einem ringförmigen Außenschlauchabschnitt aus einem laserstrahldurchlässigen, insbesondere thermoplastischen Kunststoff und einem mit diesem koextrudierten ringförmigen Innenschlauchabschnitt aus einem laserstrahlabsorbierenden schweißbarem, insbesondre thermoplastischen Kunststoff bestehen (DE 20 2004 020 093.7). Eine solche Verbindungsmuffe wird auf den Endabschnitt der Leitung aus schweißbarem, insbesondere thermoplastischem Kunststoff gelasert. Ein Stützrohr ist zu einem sicheren form- und kraftschlüssigem Aufbringen der Verbindungsmuffe auf dem Endabschnitt des Schlauchs nicht erforderlich, da bei der Montage der Verbindungsmuffe auf dem Endabschnitt des Schlauchs keine nennenswerten Kräfte ausgeübt werden, die ihn deformieren könnten. Vielmehr braucht die vorgefertigte ringförmige Verbindungsmuffe auf dem Schlauch nur provisorisch gehalten zu werden, bevor sie mit diesem durch Lasern zuverlässig verbunden wird.

Die vorliegende Erfindung beruht auf der besonderen Problematik, flexible Schlauchleitungen mit starren metallischen Anschlussleitungen von Durchlauferhitzern in Kaffee- und Espressomaschinen druck- und flüssigkeitsdicht lösbar zu verbinden, wobei den unterschiedlichen Materialien, dem hohen Druck und der hohen Temperatur sowohl des metallischen Durchlauferhitzers als auch des durch die Fluidleitungsverbindungsanordnung geleiteten erhitzten Brühwassers Rechnung zu tragen ist. Hinzu kommt die gewünschte leichte Montierbarkeit und - im Servicefall - Demontierbarkeit der Fluidleitungsverbindungsanordnung.

In der Praxis wurden bisher für die Verbindung zwischen der flexiblen Schlauchleitung und dem metallischen Anschlussrohr bzw. der starren metallischen Anschlussleitung des Durchlauferhitzers metallische Schraub/Quetschverbindungen verwendet, bei denen sich ein innerhalb einer Überwurfmutter liegender Metallring durch den Schraubdruck der Überwurfmutter in die metallische Anschlussleitung des Durchlauferhitzers kerbt und damit verankert. Nachteilig ist bei dieser Verbindung unter anderem der Fertigungsaufwand für die Überwurfmuttern mit Metallring und der Montageaufwand bei der Herstellung der Verbindung.

Der vorliegenden Erfindung liegt daher die Aufgabe zugrunde, eine unkomplizierte, rasch montierbare Fluidleitungsverbindungsanordnung zu schaffen, die im Bedarfsfall mehrfach gelöst und zuverlässig dicht zusammengesetzt werden kann und speziell zur Verbindung von druck- und flüssigkeitsdichten flexiblen Schlauchleitungen mit starren metallischen Anschlussleitungen von Durchlauferhitzern in Kaffee- und Espressomaschinen vorgesehen ist.

Eine Lösung dieser Aufgabe stellt die Fluidleitungsverbindungsanordnung mit einer Kombination der Merkmale des Anspruchs 1 dar.

Eine zweite Lösung der Aufgabe besteht in einer Kombination der Merkmale der Fluidleitungsverbindungsanordnung nach Anspruch 2.

Beide Lösungen beruhen auf einer Fluidleitungsverbindungsanordnung mit einem Verbindungsglied, welches zwei äußere Verbindungshülsenabschnitte aufweist, aus denen jeweils innen eine ringförmige Schulter ausgebildet ist und welches eine erste Leitung aus flexiblem Kunststoff mit einer zweiten Leitung verbindet, wobei jeweils auf einem durchgehend zylindrischen Endabschnitt der ersten Leitung und der zweiten Leitung in einem Abstand von einem Ende der ersten Leitung bzw. der zweiten Leitung eine Verbindungsmuffe, die innen durchgehend zylindrisch ist und eine vordere ringförmige Stirnseite sowie eine hintere ringförmige Stirnseite aufweist, wobei an jedem der Verbindungshülsenabschnitte jeweils eine Federklammer als Arretierungselement lösbar anbringbar ist, welches durch jeweils innen seitlich offene Schlitzaufnahmen in einem der Verbindungshülsenabschnitte reicht und an der hinteren ringförmigen Stirnseite einer der in einen der Verbindungshülsenabschnitte eingesteckten Verbindungsmuffen anliegt, und wobei jeweils eine vordere ringförmige Stirnseite des Verbindungsmuffenabschnitts mittelbar oder unmittelbar an der ringförmigen Schulter einer der Verbindungshülseabschnitte anliegt, wobei jeweils ein O-Ring zwischen der ringförmigen Schulter jedes der Verbindungshülsenabschnitte und der vorderen ringförmigen Stirnseite einer der Verbindungsmuffen eingeschlossen ist. Die zweite Leitung ist dabei eine starre metallische Anschlussleitung eines Durchlauferhitzers, auf die eine metallische Verbindungsmuffe aufgelötet ist.

Bei der ersten Lösung besteht weiterhin ein Kombinationsmerkmal darin, dass - wie an sich bekannt - die Verbindungsmuffe der ersten Leitung aus flexiblem Kunststoff einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst und dass die Verbindungsmuffe auf den Endabschnitt der ersten Leitung aus schweißbarem, insbesondere thermoplastischem Kunststoff gelasert ist.

Diese Lösung hat den Vorteil, dass in dem Endabschnitt der ersten Leitung aus flexiblem Kunststoff kein Stützrohr vorgesehen zu sein braucht, da bei der Anbringung der Verbindungsmuffe auf den Endabschnitt der ersten Leitung keine erheblichen Drücke ausgeübt werden.

Gemäß der zweiten Lösung wird statt der aufgelaserten Verbindungsmuffe aus Kunststoff eine metallische Verbindungsmuffe auf den Endabschnitt der ersten Leitung aufgequetscht, wozu in dem Endabschnitt ein Stützrohr eingeschoben ist, um eine einfache, zuverlässige und dichte Quetschverbindung zu gewährleisten.

Bei beiden erfindungsgemäßen Lösungen wird sowohl das Schlauchende, d.h. der Endabschnitt der ersten Leitung, mit der an ihm angebrachten Verbindungsmuffe und einem aufgesteckten O-Ring, als auch die metallische Anschlussleitung mit der auf sie aufgelöteten metallischen Verbindungsmuffe jeweils in einen der beiden äußeren Verbindungshülsenabschnitte des Verbindungsteils gesteckt und mittels einer der Federklammern, die jeweils durch die Schlitzaufnahmen in einen der Verbindungshülsenabschnitte gesteckt werden, arretiert. Im Betriebszustand der Kaffee- oder Espressomaschine, die mit dieser Fluidleitungsverbindungsanordnung ausgestattet ist, übernehmen die O-Ringe die gesicherte Abdichtungsfunktion, während die Federklammern den in den Leitungen und in dem Verbindungsteil herrschenden Druck aufnehmen.

Die Ansprüche 3-12 beinhalten weitere vorteilhafte Ausgestaltungen der Fluidleitungsverbindungsanordnung.

Eine Realisierung des die beiden Verbindungshülsenabschnitte aufweisenden Verbindungsteils als Kunststoffspritzteil gemäß Anspruch 3 ist besonders herstellungsgünstig.

Die gemäß Anspruch 4 annähernd U-förmige Federklammer mit zwei im wesentlichen parallelen, gewellten Schenkeln, deren äußere Abschnitte eine sich nach innen verjüngende Öffnung bilden, an die sich nach innen eine Leitungsaufnahmeausbuchtung anschließt, ist nicht nur herstellungsgünstig, sie kann darüber hinaus einfach ohne Werkzeug in der Fluidleitungsverbindungsanordnung montiert werden und nimmt gleichwohl betriebsmäßig den Innendruck in den Leitungen und der Fluidleitungsverbindungsanordnung zuverlässig auf. Im Bedarfsfall kann die Federklammer leicht gelöst werden. Zur Herstellung der Fluidleitungsverbindungsanordnung werden zwei solcher Federklammern eingesetzt.

Für die Schlitzaufnahmen in den Verbindungshülsenabschnitten sind zwei Ausführungen möglich: Wenn die Schlitzaufnahmen gemäß Anspruch 6 nicht nur innen, sondern auch seitlich offen sind, ermöglicht dies eine einfache Fertigung der Verbindungshülse und eine besonders einfache Handhabung der Federklammer zur Arretierung oder zum Lösen der Fluidleitungsverbindung.

Sind hingegen die Schlitzaufnahmen der Verbindungshülsenabschnitte gemäß Anspruch 5 außen seitlich geschlossen, so können die Federklammern weitgehend in ihnen verschwinden und in ihnen auch dann sicher gehalten werden, wenn auf die Federklammern so große Kräfte durch den Innendruck in den Leitungen und in der Fluidleitungsverbindung ausgeübt werden.

Die Verbindungsmuffe, wie sie jeweils für die erste Leitung aus flexiblem Kunststoff der Fluidleitungsverbindung vorgesehen ist, wird von einem koextrudierten Schlauch abgelängt, der einen Innenschlauch und einen Au-βenschlauch umfasst. Zweckmäßig basieren die Materialien des Außenschlauchs bzw. nach Anspruch 7 des ringförmigen Außenschlauchabschnitts und des Innenschlauchs bzw. des ringförmigen Innenschlauchabschnitts auf dem gleichen laserstrahldurchlässigen Kunststoff, wobei der Kunststoff des ringförmigen Innenschlauchabschnitts aber laserabsorbierend modifiziert ist. Dies ermöglicht eine unproblematische Koextrusion, als deren Ergebnis der Außenschlauch fest und dicht auf dem Innenschlauch sitzt.

Die Materialangaben und daraus resultierten Eigenschaften des Außenschlauchs und des Innenschlauchs des koextrudierten Kunststoffschlauchs gelten analog für den ringförmigen Außenschlauchabschnitt und ringförmigen Innenschlauchabschnitt der Verbindungsmuffe, die aus dem koextrudierten Kunststoffschlauch hergestellt werden.

Gemäß Anspruch 8 ist der Kunststoff des Innenschlauchs vorteilhaft einfach laserstrahlabsorbierend eingefärbt, wodurch die übrigen Materialeigenschaften des Kunststoffs nicht beeinträchtigt werden.

Besonders bewährt hat sich nach Anspruch 9 als thermoplastisches Material des Innenschlauchs ein laserstrahldurchlässiger Kunststoff, in dem Russpartikel zur Laserstrahlabsorption möglichst gleichmäßig verteilt sind.

Hierzu hat sich gemäß Anspruch 10 ein Gewichtsanteil der Russpartikel in dem Kunststoff des Innenschlauchs von 1 - 2 % als ausreichend herausgestellt.

Die Wandstärke des Innenschlauchs soll ausreichend sein, um eine genügende Laserstrahlabsorption für eine Verschweißung bzw. Verschmelzung mit dem Kunststoff des Schlauchs der ersten Leitung der Fluidverbindung zu gewährleisten. Gemäß Anspruch 11 ist eine Wanddicke von 0,2 - 0,3 mm ausreichend. Dabei kann der koextrudierte Schlauch überwiegend aus laserstrahldurchlässigem Kunststoff bestehen, der nicht laserstrahlabsorbierend modifiziert ist.

Zwei Ausführungsbeispiele der Erfindung werden im folgenden anhand einer Zeichnung mit drei Figuren erläutert, woraus sich weitere vorteilhafte Merkmale ergeben können. Es zeigt:
- Figur 1: einen Längsschnitte durch eine erste Ausführungsform der Fluidleitungsverbindungsanordnung, die als Steckverbindung einer flexiblen Kunststoffleitung mit einer aufgelaserten Verbindungsmuffe ausgeführt ist und die mit einer starren metallischen Anschlussleitung eines Durchlauferhitzers verbunden ist,
- Figur 2: einen Längsschnitt durch eine zweite Ausführungsform der Fluidleitungsverbindungsanordnung einer flexiblen Kunststoffleitung, die eine metallische Verbindungsmuffe aufweist und die mit der starren metallischen Anschlussleitung eines Durchlauferhitzers verbunden ist, und
- Figur 3: eine Explosionsdarstellung der Fluidleitungsverbindungsanordnung gemäß Figur 1, wobei die Fluidleitungsverbindungsanordnung nach Figur 2 insoweit gleich aussehen kann.

In allen Figuren sind gleiche Teile mit übereinstimmenden Bezugszeichen versehen.

In beiden Ausführungsbeispielen der Fluidleitungsverbindungsanordnung wird eine flexible Kunststoffleitung als erste Leitung 1 mit einer starren metallischen Anschlussleitung als zweite Leitung 2, die Teil eines nur teilweise angedeuteten Durchlauferhitzers 3 ist, mittels eines Verbindungsteils 4 verbunden, welches zwei einander entgegengesetzten Enden offene Verbindungshülsenabschnitte 4a, 4b aufweist, die gleiche Formmerkmale aufweisen und durch einen Leitungsabschnitt 4c miteinander verbunden sind.

Auf die erste Leitung 1 ist an einem Endabschnitt kurz vor ihrem verbindungsseitigen Ende eine Verbindungsmuffe 5 aufgelasert, die der Fixierung der ersten Leitung 1 in den Verbindungshülsenabschnitt 4a des Verbindungsteils 4 dient.

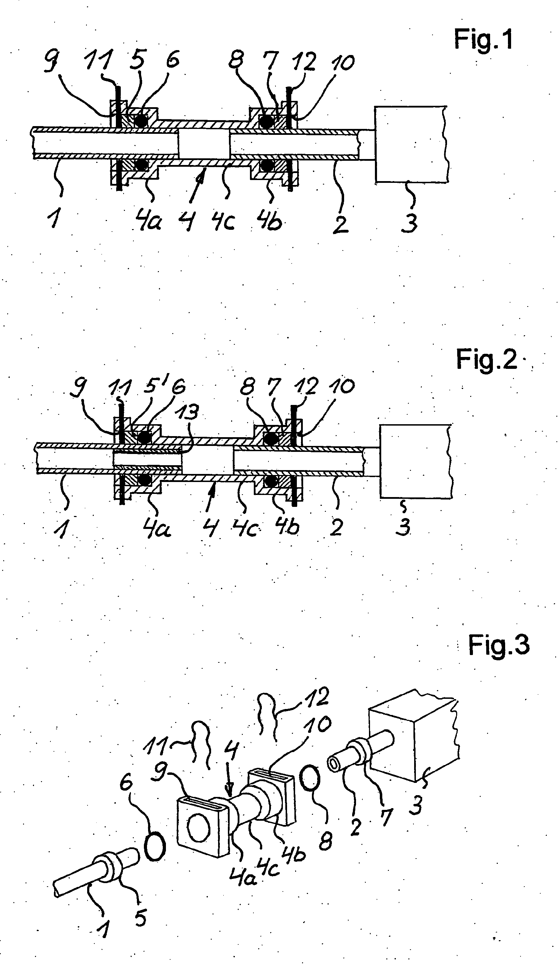

Die hierzu verwendete Verbindungsmuffe 5 aus Kunststoff ist ein Abschnitt eines koextrudierten Schlauchs mit einem ringförmigen Innenschlauchabschnitt und einem ebenso ringförmigen Außenschlauchabschnitt und ist von einem solchen koextrudierten Schlauch abgelängt. Der Innenschlauchabschnitt und der Außenschlauchabschnitt sind in Figur 1 nicht getrennt dargestellt.

Die Verbindungsmuffe 5 besteht aus einem Copolymer, insbesondere Tetrafluormethylen oder Hexafluorpropylen. Das Copolymer ist normalerweise laserstrahldurchlässig und transparent. In dieser Form bildet es den ringförmigen Außenschlauchabschnitt der Verbindungsmuffe. Hingegen weist zur Laserstrahlenabsorption der Kunststoff des Innenschlauchabschnitts einen Russanteil von 1-2 Gewichtsprozent auf; er ist schwarz. Der Innenschlauchabschnitt ist durch die Co-Extrusion des Schlauchs mit dem Außenschlauch form- und kraftschlüssig verbunden. Der Innenschlauch ist mit einer typischen Wanddicke von 0,25 mm ausreichend dick, um nach dem Aufbringen der Verbindungsmuffe 5 auf dem Endabschnitt der ersten Leitung 1 mit vorne herausragendem Schlauchende in einem Werkzeug unter Laserstrahlabsorption genügend erwärmt zu werden und mit dem innen anliegenden Endabschnitt verschweißt zu werden. Der Außenschlauchabschnitt kann eine mehrfach größere Wandstärke als der Innenschlauchabschnitt aufweisen, um mechanisch widerstandsfähig zu sein. Beide Schlauchabschnitte der Verbindungsmuffe 5 bilden zusammen eine nicht bezeichnete ringförmige Stirnseite, an der ein O-Ring 6 als Dichtelement anliegen kann.

Auf der metallischen Anschlussleitung 2 des Durchlauferhitzers 3 wird hingegen eine Verbindungsmuffe 7 aus Metall aufgelötet und ist damit in anderer Weise form- und kraftschlüssig mit der metallischen Anschlussleitung 2 verbunden als die Verbindungsmuffe 5 aus Kunststoff mit der ersten Leitung 1.

Nach dem Aufbringen der Verbindungsmuffen 5 und 7 auf der ersten Leitung 1 bzw. der zweiten Leitung 2 kann eine Verbindung der beiden Leitungen mittels des Verbindungsteils 4 erfolgen. Hierzu werden die Enden der ersten Leitung 1 mit der Verbindungsmuffe 5 und dem O-Ring 6 in den Verbindungshülsenabschnitt 4a geschoben und in das Ende der zweiten Leitung 2 mit der Verbindungsmuffe 7 und einem weiteren O-Ring 8 in den Verbindungshülsenabschnitt 4b.

Zur Verbindung der Verbindungshülsenabschnitte 4a, 4b mit der ersten Leitung 1 als flexible Kunststoffleitung mit der zweiten Leitung 2 als metallische Anschlussleitung sind aus den Verbindungshülsenabschnitte 4a, 4b Schlitzaufnahmen 9, 10 ausgeformt, die innen seitlich offen sind, siehe Figuren 1 und 2, jedoch außen seitlich geschlossen sind, siehe Figur 3.

Eine in Figur 3 erkennbare Öffnung auf der Oberseite der flach quaderförmigen Enden der Verbindungshülsenabschnitte verläuft im wesentlichen rechtwinklig zwischen den beiden in dieser Figur nicht gezeigten seitlichen Schlitzaufnahmen.

Nachdem die Enden der ersten Leitung 1 und der zweiten Leitung 2 in dem Verbindungsteil 4 unter Einschluss der O-Ringe 6, 8 eingeschoben sind, erfolgt die feste aber lösbare Verbindung durch Einschieben jeweils einer Federklammer 10 bzw. 11, in die Schlitzaufnahmen 8 bzw. 9. Die Federklammer wird mit ihrem offenen erweiterten Ende in die zugeordneten Schlitzaufnahmen 8 bzw. 9 ohne Werkzeug leicht eingeschoben und hält infolge der gewellten Formgebung ihrer beiden im wesentlichen parallelen Schenkel den Endabschnitt der ersten bzw. zweiten Leitung axial fixiert, wobei die Federklammer gegen die Verbindungsmuffe 5 bzw. 7 drückt und mit Hilfe des O-Rings 6 bzw. 8 eine fluiddichte Verbindung herstellt. Dabei liegt der O-Ring einerseits an einer nicht bezeichneten verbindungsseitigen Stirnseite der Verbindungsmuffe 5 bzw. 7 und andererseits an einer ebenfalls nicht bezeichneten Schulter an, an welcher der die beiden Verbindungshülsenabschnitte 4a und 4b verbindende Leitungsabschnitt 4c in einen die Verbindungsmuffe 5 bzw. 7 aufnehmenden Abschnitt größeren Innendurchmessers übergeht.

Hinsichtlich der Abdichtung sind die erste Ausführungsform gemäß Figur 1 und die zweite Ausführungsform gemäß Figur 2 gleichwirkend.

Beide Ausführungsformen zeichnen sich durch unkomplizierte, herstellungsgünstige Formgebung und problemlose Wiederverwendbarkeit im Wartungsfall aus.

### Bezugszahlenliste

- 1: erste Leitung (flexible Kunststoffleitung)
- 2: zweite Leitung (metallische Anschlussleitung)
- 3: metallischer aufgelöteter Arretierungsring
- 4: Verbindungsteil
- 4a: Verbindungshülsenabschnitt
- 4b: Verbindungshülsenabschnitt
- 4c: Leitungsabschnitt
- 5: aufgelaserte Verbindungsmuffe aus Kunststoff
- 5': aufgequetschte Verbindungsmuffe aus Metall
- 6: O-Ring
- 7: aufgelötete Verbindungsmuffe aus Metall
- 8: O-Ring
- 9: Schlitzaufnahmen (Verbindungsmuffe-Aufnahmeschlitz)
- 10: Schlitzaufnahmen (Verbindungsmuffe-Aufnahmeschlitz)
- 11: Federklammer
- 12: Federklammer
- 13: Stützrohr (Gegendruckhülse)

## Patentansprüche

1. Fluidleitungsverbindungsanordnung mit einem Verbindungsteil (4), welches zwei äußere Verbindungshülsenabschnitte (4a, 4b) aufweist, aus denen jeweils innen eine ringförmige Schulter ausgebildet ist, und welches eine erste Leitung (1) aus flexiblem Kunststoff mit einer zweiten Leitung (2) verbindet, wobei jeweils auf einem durchgehend zylindrischen Endabschnitt der ersten Leitung (1) und der zweiten Leitung (2) in einem Abstand von einem Ende der ersten Leitung bzw. der zweiten Leitung eine Verbindungsmuffe (5, 7), die innen durchgehend zylindrisch ist und eine vordere ringförmige Stirnseite sowie eine hintere ringförmige Stirnseite aufweist, form- und kraftschlüssig anliegend aufgebracht ist, wobei an jedem der Verbindungshülsenabschnitte (4a, 4b) jeweils eine Federklammer (11, 12) als Arretierungselement lösbar anbringbar ist, welches durch jeweils innen seitlich offene Schlitzaufnahmen (9, 10) in einem der Verbindungshülsenabschnitte (4a, 4b) reicht und an der hinteren ringförmigen Stirnseite einer der in einen der Verbindungshülsenabschnitte eingesteckten Verbindungsmuffen (5, 7) anliegt, und
wobei jeweils ein O-Ring (6, 8) zwischen der ringförmigen Schulter jedes der Verbindungshülsenabschnitte (4a, 4b) und der vorderen ringförmigen Stirnseite einer der Verbindungsmuffen (5, 7) eingeschlossen ist,
**dadurch gekennzeichnet,**
**dass** die zweite Leitung (2) eine starre metallische Anschlussleitung eines Durchlauferhitzers (3) ist, auf die eine metallische Verbindungsmuffe (7) aufgelötet ist,
**dass** die Verbindungsmuffe (5) der ersten Leitung einen ringförmigen Außenschlauchabschnitt aus einem laserstrahldurchlässigen, insbesondere thermoplastischen Kunststoff und einen mit diesem koextrudierten ringförmigen Innenschlauchabschnitt aus einem laserstrahlabsorbierenden schweißbaren, insbesondere thermoplastischen Kunststoff umfasst und
**dass** die Verbindungsmuffe (5) auf den Endabschnitt der ersten Leitung (1) aus schweißbarem, insbesondere thermoplastischem Kunststoff gelasert ist.

2. Fluidleitungsverbindungsanordnung mit einem Verbindungsteil (4), welches zwei äußere Verbindungshülsenabschnitte (4a, 4b) aufweist, aus denen jeweils innen eine ringförmige Schulter ausgebildet ist, und welches eine erste Leitung (1) aus flexiblem Kunststoff mit einer zweiten Leitung (2) verbindet, wobei jeweils auf einem durchgehend zylindrischen Endabschnitt der ersten Leitung (1) und der zweiten Leitung (2) in einem Abstand von einem Ende der ersten Leitung bzw. der zweiten Leitung eine Verbindungsmuffe (5', 7), die innen durchgehend zylindrisch ist und eine vordere ringförmige Stirnseite sowie eine hintere ringförmige Stirnseite aufweist, form- und kraftschlüssig anliegend aufgebracht ist, wobei an jedem der Verbindungshülsenabschnitte (4a, 4b) jeweils eine Federklammer (11, 12) als Arretierungselement lösbar anbringbar ist, welches durch jeweils innen seitlich offene Schlitzaufnahmen (9, 10) in einem der Verbindungshülsenabschnitte (4a, 4b) reicht und an der hinteren ringförmigen Stirnseite einer der in einen der Verbindungshülsenabschnitte eingesteckten Verbindungsmuffen (5', 7) anliegt, und
wobei jeweils ein O-Ring (6, 8) zwischen der ringförmigen Schulter jedes der Verbindungshülsenabschnitte (4a, 4b) und der vorderen ringförmigen Stirnseite einer der Verbindungsmuffen (5', 7) eingeschlossen ist,
**dadurch gekennzeichnet,**
**dass** die zweite Leitung (2) eine starre metallische Anschlussleitung eines Durchlauferhitzers (3) ist, auf die eine metallische Verbindungsmuffe (7) aufgelötet ist,
**dass** in dem Endabschnitt der ersten Leitung (1) aus flexiblem Kunststoff ein Stützrohr (13) eingeschoben ist und
**dass** eine metallische Verbindungsmuffe (5') auf den Endabschnitt der ersten Leitung aufgequetscht ist.

3. Fluidleitungsverbindungsanordnung nach einem der Ansprüche 1 und 2,
**dadurch gekennzeichnet,**
**dass** das die beiden Verbindungshülsenabschnitte (4a, 4b) aufweisende Verbindungsteil (4) ein Kunststoffspritzteil ist.

4. Fluidleitungsverbindungsanordnung nach einem der vorangehenden Ansprüche,
**dadurch gekennzeichnet,**
**dass** die Federklammer (11 bzw. 12) annähernd U-förmig mit zwei im wesentlichen parallelen, gewellten Schenkeln ausgebildet ist, deren äußere Abschnitte eine sich nach innen verjüngende Öffnung bilden, an die sich nach innen eine Leitungsaufnahmeausbuchtung anschließt.

5. Fluidleitungsverbindungsanordnung nach einem der vorangehenden Ansprüche,
**dadurch gekennzeichnet,**
**dass** die Schlitzaufnahmen (9, 10) der Verbindungshülsenabschnitte (4a, 4b) außen seitlich geschlossen sind.

6. Fluidleitungsverbindungsanordnung nach einem der Ansprüche 1 bis 4,
**dadurch gekennzeichnet,**
**dass** die Schlitzaufnahmen (9, 10) der Verbindungshülsenabschnitte (4a, 4b) auch außen seitlich offen sind.

7. Fluidleitungsverbindungsanordnung nach Anspruch 1 und gegebenenfalls einem der Ansprüche 3 bis 6,
**dadurch gekennzeichnet,**
**dass** die Materialien des ringförmigen Außenschlauchabschnitts und des ringförmigen Innenschlauchabschnitts der Verbindungsmuffe (5) auf dem gleichen laserstrahldurchlässigen Kunststoff basieren und dass der Kunststoff des ringförmigen Innenschlauchabschnitts zusätzlich laserstrahlabsorbierend modifiziert ist.

8. Fluidleitungsverbindungsanordnung nach Anspruch 7,
**dadurch gekennzeichnet,**
**dass** der Kunststoff des ringförmigen Innenschlauchabschnitts laserstrahlabsorbierend eingefärbt ist.

9. Fluidleitungsverbindungsanordnung nach Anspruch 8,
**dadurch gekennzeichnet,**
**dass** das thermoplastische Material des ringförmigen Innenschlauchabschnitts aus einem an sich laserstrahldurchlässigen Kunststoff besteht, in dem Russpartikel verteilt sind.

10. Fluidleitungsverbindungsanordnung nach Anspruch 9,
**dadurch gekennzeichnet,**
**dass** der Gewichtsanteil der Russpartikel in dem Kunststoff des ringförmigen Innenschlauchabschnitts 1 - 2 % beträgt.

11. Fluidleitungsverbindungsanordnung nach einem der Ansprüche 1, 7 bis 10,
**dadurch gekennzeichnet,**
**dass** die Wanddicke des ringförmigen Innenschlauchabschnitts 0,2 - 0,3 mm beträgt.
